# EUROPEAN PATENT APPLICATION

(11) **EP 4 621 272 A1**
(43) Date of publication of application: **24.09.2025**
(21) Application number: 25163313.7
(22) Date of filing: 12.03.2025
(51) Int. Cl.: F16K 37/00, G01K 1/08, G01K 1/20, G01K 11/3206

(54) **VALVE MONITORING SYSTEM AND METHOD**

(30) Priority: 19.03.2024 NL 2037283; 19.03.2024 NL 2037284
(71) Applicant: Senergetics Holding B.V., 5656 AE Eindhoven (NL)
(72) Inventor: JACOBS, Frank, 6035 CZ Ospel (NL); -, Anitha, 5509 NN Veldhoven (NL)
(74) Representative: EP&C

(57) **Abstract**

The first aspect of the invention relates to a valve monitoring system (1) for determining a condition of a valve (5). The valve monitoring system (1) comprises a processor (3) and external parameter sensors (2) that are provided on an outside of the valve (5) to measure external parameters of the outside of the valve. (5)

## Description

A first aspect of the invention relates to a valve monitoring system for determining a condition of a valve. The first aspect of the invention is also related to a valve comprising a valve monitoring system according to the invention. The first aspect of the invention is further related to a method for determining a condition of a valve, wherein use is made of a valve monitoring system according to the first aspect of the invention.

Industrial piping systems may be used to transport a fluid, such as a gas or a liquid, from a first location to a second location, for example at a raised or lowered temperature relative to the environment. These industrial piping systems generally comprise multiple valves for controlling junctions or preventing flow of the fluid through the pipe. These valves are susceptible to malfunctioning, e.g. as a result of wear. If a valve malfunctions, or otherwise does not perform its function to a desired degree, the fluid flow may be impacted which may result in a suboptimal process, damage to the valve, or unexpected downtime of a factory. As a result, the condition of valves in industrial piping systems may be regularly checked, for example by opening the valve or regular maintance routines. This may require stopping the fluid flow and thus may disrupt the industrial process.

WO 2013/012849 A1 discloses a control valve monitoring system including at least one sensor connected to one of a valve stem or a valve shaft, and the at least one sensor detects a change in mechanical integrity of one of the valve stem or valve shaft.

The first aspect of the invention aims to provide an improved valve monitoring system for determining the condition, e.g. a functioning condition, e.g. a malfunctioning, of the valve.

The aim of the first aspect of the invention is achieved by the valve monitoring system according to claim 1.

The valve monitoring system of the first aspect of the invention is configured for determining a condition of a valve of an industrial piping system comprising the valve and one or more pipes connected to the valve for allowing a fluid to flow therethrough, wherein the valve is configured for switching between a first valve configuration and a second valve configuration. The condition may be a normal condition, a malfunctioning of the valve, or a declining condition of the valve, e.g. indicating that the valve needs to be replaced or maintenance has to be performed, e.g. before the valve breaks.

The valve is configured for switching between a first valve configuration and a second valve configuration. For example, in the first valve configuration the valve may allow fluid flow through the pipe and in the second valve configuration fluid flow may be prevented through the valve. In other example, in the first valve configuration fluid is allowed to flow to a first exit of the valve and in the second valve configuration fluid is allowed to flow to a second exit of the valve. A condition of the valve may be related to if the fluid flows according to the flow according to an expected fluid flow for the current valve configuration. For example, a valve may be said to be malfunctioning if the fluid flows, even though the valve is expected to prevent fluid flow, e.g. by being in the second configuration.

The valve monitoring system comprises one or more external parameter sensors that are provided on an outside of the valve or an outside of the pipe for measuring one or more external parameters of an outside of the valve or the outside of the pipe, wherein the one or more external parameter sensors comprise at least one of a temperature sensor and a vibration sensor. The external parameter sensors are provided on an outside of the valve or an outside of the pipe, such that the measured external parameters are associated with the valve. For example, the external parameter sensors may have to be provided sufficiently close to the valve to be able to measure external parameters that may be associated with the valve. This allows the sensors to be provided without dismantling the valve and after the valve is already in use. For example, when the fluid flows through the valve or the pipe, the fluid may influence the outside temperature of the valve or the pipe, e.g. because the fluid is heated, which effect may be measured without having to provide the sensor on an inside of the valve. Similarly, a vibration of the valve, e.g. due to a fluid flow, may be measured by the sensors. Other sensor types, e.g. for measuring other variables, may also be provided to support the temperature and/or vibration sensors. The outside of the valve may be understood as an outside of a housing of the valve, e.g. away from any of the internal components of the valve.

The external parameter sensors may be configured to measure continuously, e.g. for a set amount of time, or discretely, e.g. taking a measurement at a single point in time. This may allow for obtaining parameter patterns of the measured parameters which are indicative of the condition of the valve.

The valve monitoring system further comprises a processor that is operative connected to the one or more external parameter sensors to receive the measured parameters thereof. The processor may be provided on a central location in an industrial complex, e.g. such as a control room.

The processor is configured to:
- receive one or more external parameters measured, e.g. by discrete or continuously measuring of the outside of the valve, by the one or more external parameter sensors, wherein the one or more external parameters comprise at least one of a temperature of the outside of the valve or pipe and a vibration of an outside of the valve or pipe;
- compare the one or more received external parameters to one or more corresponding expected external parameters associated with the valve;
- determine the condition of the valve based on the comparing of the one or more received external parameters to the one or more corresponding expected external parameters, for example determine the condition of the valve based on a deviation between at least one of the one or more received external parameters and at least one of the corresponding expected external parameters; and
- output a signal representative of the determined condition of the valve.

The first aspect of the invention is based on the insight that by measuring a external parameter, e.g. a temperature or a vibration, on an outside of the valve, a behaviour of a fluid flow inside the valve may be monitored. This allows to determine a condition of the valve, e.g. by comparing the measured external parameter to an expected external parameter for a given valve configuration, without having to measure or look inside the valve. Thus, the system allows to non-intrusively monitor a condition of a valve, or many valves provided with corresponding sensors, in an industrial complex.

The measured external parameter, e.g. the temperature and/or vibration, may be compared by the processor to an expected external parameter. The expected external parameter may be a external parameter pattern, e.g. a external parameter evolution over time, e.g. that corresponds to a change between the first configuration and the second configuration. The expected external parameter may be an expected external parameter of a well-functioning valve, or an expected external parameter of a malfunctioning valve.

In embodiments, the valve monitoring system comprises an optical fiber having one or more fiber Bragg gratings with grating structures that comprise regions of alternating refractive index for measuring a temperature, a light source for emitting light through the optical fiber and an optical sensor for measuring light propagated by the light source through the optical fiber, wherein corresponding fiber Bragg gratings form part of the at least one temperature sensor and/or the at least one vibration sensor. Fiber Bragg gratings in an optical fiber may be used to measure temperature or vibrations due to changes in light reflected by the fiber Bragg gratings. For example, a temperature change may cause the fiber to expand or contract which results in a different optical behaviour of the optical fiber. Similarly, a vibration may cause a movement in the fiber which may also cause a different optical behaviour. An advantage of this embodiment is that a single optical fiber with multiple fiber Bragg gratings maybe provided which allows to measure temperature and/or vibration on multiple locations of a valve or on multiple valves. It may further be easier to mount the optical fiber on the piping system comprising the one or more valves.

In further embodiments, the optical fiber is attached to the outside of the valve at the one or more fiber Bragg gratings. For example, the optical fiber may be provided with various housings at locations of the gratings, which housings allow the optical fiber to be attached to the outside of the valve. The housings may further be used to transfer the external parameter, e.g. the temperature or vibration, from the outside of the valve to the optical fiber.

In embodiments, the one or more expected external parameters, e.g. an expected temperature or an expected vibration, associated with the valve are related to corresponding measured external parameters associated with a second valve, e.g. wherein the second valve is a valve adjacent to the valve in an industrial piping structure. The expected external parameters may be obtained, e.g. by the processor, by measurements of a second valve that is similar, e.g. adjacent, to the valve being monitored. Measurements of the second valve may be used to obtain the expected external parameters, e.g. when the second valve is in a same or similar configuration compared to the valve being monitored. For example, in embodiments the processor is configured to determine the one or more expected external parameters of the valve based on the corresponding measured external parameters of the second valve.

In embodiments, the processor is further configured to:
- perform multiple measurements with the one or more external parameter sensors at different points in time, e.g. at regular intervals, to obtain external parameter data of each external parameter sensor at the different points in time; and
- store the external parameter data of each of the external parameter sensors.

For example, the external parameter data may be used to determine a time evolution of a condition of the valve, e.g. a wear of the valve. The external parameter data may also be used to determine the expected external parameters, e.g. the expected external parameters may be related to an average of the external parameters in the external parameter data, e.g. corresponding to an associated valve configuration.

In embodiments, the one or more expected external parameters are related to measured external parameters in a past time period of the valve or the pipe, e.g. the external parameter data of corresponding external parameter sensors, e.g. wherein the one or more expected external parameters are an average of the external parameter data of corresponding external parameter sensors. For example, regular measurements of the external parameters of the valve may result in expected external parameters for different valve configurations and/or conditions, such as fluid flow conditions. This may then be used to determine the expected external parameters dependent on the different valve configurations and/or conditions, for this specific valve allowing for an improved accuracy of determining and/or monitoring the valve condition.

In embodiments, the processor is configured to select the expected external parameters from the group comprising external parameters associated with the first valve configuration, external parameters associated with the second valve configuration, and external parameters associated with the valve switching between the first valve configuration and the second valve configuration. In these embodiments, the processor may select the expected external parameters from the group corresponding to the current valve configuration. The different expected external parameters may be obtained by previous measurements of the external parameters with the valve in different configurations, or by monitoring other valves, e.g. in the same industrial complex, e.g. on the same piping.

In embodiments, the processor is configured to select the expected external parameters based on if the valve is in the first valve configuration, the second valve configuration, or between the first valve configuration and the second valve configuration.

In embodiments, the processor is configured to receive an input representing if the valve is in the first valve configuration, the second valve configuration, or between the first valve configuration and the second valve configuration. The input may be used in selecting an expected external parameter to compare to the measured external parameter.

The first aspect of the invention is further related to a valve or pipe of an industrial piping system comprising a valve monitoring system according to the first aspect of the invention.

The first aspect of the invention is further related to a method for determining a condition of a valve of an industrial piping system comprising the valve and one or more pipes connected to the valve for allowing a fluid to flow therethrough, wherein use is made of a valve monitoring system according to the first aspect of the invention.

In embodiments of the method, the valve is configured for switching between a first valve configuration and a second valve configuration, comprising:
- providing one or more external parameter sensors on an outside of the valve or an outside of the pipe, wherein the one or more external parameter sensors are for measuring one or more external parameter of the outside of the valve or an outside of the pipe, wherein the one or more external parameter sensors comprise at least one of a temperature sensor and a vibration sensor;
- discretely or continuously measuring one or more external parameters of the outside of the valve or an outside of the pipe by the one or more external parameter sensors, wherein the one or more external parameters comprise at least one of a temperature of the outside of the valve and a vibration of an outside of the valve and wherein the one or more external parameters are associated with the valve;
- comparing the one or more measured external parameters to one or more corresponding expected external parameters associated with the valve; and
- determining the condition of the valve based on the comparing of the one or more received external parameters to the one or more corresponding expected external parameters, for example determine the condition of the valve based on a deviation between at least one of the one or more received external parameters and at least one of the corresponding expected external parameters.

In embodiments of the method, the method further comprises:
- performing multiple measurements with the one or more external parameter sensors at different points in time, e.g. at regular intervals, to obtain external parameter data of each external parameter sensor at the different points in time; and
- storing the external parameter data of each of the external parameter sensors.

In embodiments, the method further comprises:
- selecting the expected external parameters from the group comprising external parameters associated with the first valve configuration, external parameters associated with the second valve configuration, and external parameters associated with the valve switching between the first valve configuration and the second valve configuration.

In embodiments, the method further comprises:
- selecting the expected external parameters based on if the valve is in the first valve configuration, the second valve configuration, or between the first valve configuration and the second valve configuration.

A second aspect of the invention relates to a method for manufacturing a thermal sensor comprising an optical fiber and a housing. The second aspect of the invention further relates to a thermal sensor comprising an optical fiber and a housing. The second aspect of the invention further relates to a sensor array comprising the thermal sensor of the second aspect of the invention and a measurement system comprising the sensor array of the second aspect of the invention.

Distributed Bragg reflectors, for example fiber Bragg gratings, may be a structure formed in an optical fiber from multiple layers of alternating materials with varying refractive index, or by periodic variation of some characteristic of a dielectric waveguide, resulting in periodic variation in the effective refractive index in the optical wire. A distributed Bragg reflector may be constructed in a portion of an optical fiber to reflect a particular wavelength range of light and to transmit other wavelengths.

Distributed Bragg reflectors may be used as sensors because local changes in the optical fiber at the distributed Bragg reflectors may change the wavelength of reflected light. For example, a change in temperature may result in a contraction or expansion of the optical wire which may result in changes in distances between periodic variations of the distributed Bragg reflectors. This in turn may influence the reflected wavelength. By monitoring the reflected wavelength a change therein may be measured, which may be related to a temperature change. In this way, an optical fiber with a distributed Bragg reflector may form a temperature sensor.

A downside of this approach is that local changes in the optical fiber may also be sourced due to strain or vibrations of the optical fiber at the distributed Bragg reflector, the effect thereof may have to be reduced to allow for more accurate temperature measurements. A way to alleviate the possible effect of strain or vibrations is to provide the optical fiber at the distributed Bragg reflector thereof with a housing such that the optical fiber has a curvature in the housing. The curvature reduces the possible effect, of strain or vibrations coming from an outside of the housing, on the optical fiber. Thus, this setup allows for an improved temperature sensor.

The second aspect of the invention aims to provide an improved method of manufacturing a thermal sensor based on a distributed Bragg reflector that allows for automating the manufacturing process. The second aspect of the invention also aims to provide an alternative method of manufacturing the thermal sensor.

The aim of the second aspect of the invention is achieved by the method of clause 1.

The method for manufacturing a thermal sensor comprises providing an optical fiber with a sensor portion having a distributed Bragg reflector. The distributed Bragg reflector may be a fiber Bragg grating, a Fabry-Perot etalon, or other type of distributed Bragg reflector. As explained above, such an optical fiber allows for measuring temperature by providing a light beam therethrough, e.g. from a light source, and measuring a light reflected from the distributed Bragg reflector. The optical fiber may be provided with multiple sensor portions each having an associated distributed Bragg reflector, in which case the method of the second aspect of the invention may be performed for each sensor portion.

The method then comprises fixing the optical fiber in a first opening provided in a first portion of a housing and fixing the optical fiber in a second opening provided in a second portion of the housing such that the sensor portion is between the first opening and the second opening, wherein the first opening and second opening extend from an outside of the housing to an inside of the housing. The first portion and the second portion of the housing may initially be connected, e.g. through connecting means as described below, or the first portion and the second portion may initially be disconnected, e.g. be separate portions. In either case, the first portion and the second portion are initially movable relative to each other, i.e. before fixing them together.

The housing may be a plastic housing or a metal, e.g. an aluminium, housing. Preferably, the housing is made from a material, or partly made from a material, having a good thermal conductivity, allowing a temperature from an outside of the housing to more easily reach the sensor portion inside the housing.

The housing may initially be formed from multiple separate parts which parts may be correspond or overlap with the first and second portions. For example, as described above, the first portion of the housing may correspond with a first part and a second part of the housing may correspond with the second portion. The housing may also initially be formed from two parts, wherein each part comprises a piece of the first and second portion, i.e. connected via connecting means that allow relative movement therebetween.

After the optical fiber is fixed to the first portion and second portion, the method comprises moving the first portion and the second portion of the housing relative to each other such that a distance between the first opening and the second opening is reduced and such that the sensor portion is provided with a curvature. By moving the first portion and second portion together, and because the optical fiber is fixed thereto, the optical fiber will curve between the first portion and second portion. As explained above this curvature allows to reduce the influence of strain or vibrations on the sensor portion of the optical fiber. The first portion and second portion may be moved by applying a force thereupon, or by applying another source of movement, e.g. a temperature change which forces a material of the housing to shrink inducing the movement.

The method further comprises fixing the first portion of the housing to the second portion of the housing preventing further relative movement and such that the first portion and the second portion of the housing form a cavity on the inside of the housing containing the curved sensor portion. The first portion and second portion may be fixed by fixing means, such as a glue or a mechanical fixing means. The first portion and second portion may also be fixed by locking movement of connecting means connecting the first portion and the second portion.

The method of the second aspect of the invention allows to easily manufacture a thermal sensor comprising a optical fiber with a distributed Bragg grating and a housing, wherein the optical fiber is provided curved in the housing. By first fixing the housing to either side of the sensor portion of the optical fiber and subsequently reducing the distance between the two openings of the housing, the optical fiber is curved predictably and reproducibly in the housing. This process may easily be automated.

In embodiments, the method comprises fixing the optical fiber in the first opening and the second opening by sonic welding, e.g. ultrasonic welding, and/or wherein the method comprises fixing the first portion of the housing to the second portion of the housing using sonic welding, e.g. ultrasonic welding. Sonic welding is a technique that allows to fix certain plastics to an optical fiber by applying a sonic weld. This may be less disruptive to the sensor portion of the optical fiber compared to using for example a thermal welding technique.

In embodiments, the method further comprises providing the optical fiber with a protective layer around the optical fiber on a portion of the optical fiber different from the sensor portion.

Preferably, the protective layer is provided such that the first portion and second portion of the housing are fixed to the protective layer, and the optical fiber is only exposed on an inside of the housing.

In embodiments, the first portion of the housing is connected to the second portion of the housing by connecting means which allow for movement of the first portion relative to the second portion. The connecting means allow for the movement of the first portion relative to the second portion to allow the two portions to move closer to each other just curving the optical fiber after the fiber has been fixed to the first and second portions. Different embodiments of connecting means may be possible, for example as described herein.

In embodiments, the connecting means are embodied as a foldable structure, e.g. as a foldable accordion structure. The connecting means may be mechanical connecting means that are foldable. Thus, in an unfolded configuration, the first portion is further away from the second portion than in a folded configuration. For example, the connecting means may have an accordion structure, for example wherein multiple bars are connected via hinges to allow for a movement of the first housing relative to the second housing.

In another embodiment, the connecting means are embodied as a compressible material, e.g. which may be fixed by rigidization thereof, e.g. by applying a temperature thereto to make the compressible material rigid. Different possible compressible materials exist that allow for movement of the first portion relative to the second portion. Some of these materials may have different properties depending on whether or not an external activator, such as a temperature or heat, is applied thereon. For example, the material may be compressible before applying the heat thereto, and it becomes rigid after applying the heat thereto. This allows to first move the first portion relative to the second portion while the material is compressible and to subsequently fix the material by applying the activator, e.g. such as the temperature. The compressible material may also be fixed in different ways, for example by applying a resin or gluelike material or by providing a mechanical fixing means to the connecting means.

In another embodiment, the connecting means are embodied as a sliding mechanism that allows sliding of the first portion relative to the second portion. In this embodiment, the first portion of the housing is connected to the second portion of the housing via sliding means, e.g. a slide and a slide receiver, that allows for relative movement of the first portion with respect to the second portion such that a distance therebetween may be reduced. Also in this embodiment, the connecting means may be fixed in different ways as described herein.

In embodiments, the optical fiber is not in contact with a wall of the cavity after fixing the first portion and the second portion of the housing. This may further reduce the influence of external vibrations or strains on the sensor portion of the fiber.

In embodiments, the distributed Bragg reflector is a fiber Bragg grating.

In embodiments, the method further comprises fixing the first portion of the housing to the second portion of the housing by applying a fixing means, such as a glue or a mechanical fixing means.

In embodiments, the sensor portion of the optical fiber is arranged stress-free in the cavity after fixing the first portion and the second portion of the housing. The optical fiber may be said to be provided stress-free into the housing when applying a force on the optical fiber from an outside of the housing, e.g. a pulling force, does not translate in a force applied on the fiber in the inside of the housing.

In embodiments, the housing comprises a lower part having a cross section of the first and second openings and a cross section of the cavity and a complementary upper part having a cross section of the first and second openings and a cross section of the cavity, wherein the method comprises:
- inserting the optical fiber into the lower part of the housing by guiding the optical fiber through the first and second openings such that the sensor part is arranged in between the first and second openings; and
- fixing the upper part of the housing on the lower part of the housing.

This embodiment may allow to move easily provide the fiber through the first opening and the second opening by first inserting the fiber into the lower part and then providing the upper part. In embodiments where the first portion is initially disconnected from the second portion, initially a total of four housing parts may be present.

The second aspect of the invention is also related to a thermal sensor comprising:
- an optical fiber with a sensor portion having a distributed Bragg reflector; and
- a housing having a first opening provided in a first portion of a housing and a second opening provided in a second portion of the housing, wherein the optical fiber is fixed in the first opening and the second opening such that the sensor portion is between the first opening and the second opening, wherein the first opening and second opening extend from an outside of the housing to an inside of the housing, and such that the first portion and the second portion of the housing form a cavity on the inside of the housing containing a curved sensor portion.

In embodiments, the thermal sensor further comprises a protective layer around the optical fiber on a portion of the optical fiber different from the sensor portion.

In embodiments, the thermal sensor further comprises connecting means that connect the first portion of the housing to the second portion of the housing by connecting means. The connecting means may initially allow movement between the first portion and the second portion of the housing, but after fixing the connecting means, the movement between the first housing and the second housing may be prevented.

In embodiments, the connecting means are embodied as a foldable structure, e.g. as a foldable accordion structure.

In embodiments, the connecting means are embodied as a compressible material, e.g. which may be fixed by rigidization thereof, e.g. by applying a temperature thereto to make the compressible material rigid.

In embodiments, the connecting means are embodied as a sliding mechanism that allows sliding of the first portion relative to the second portion.

In embodiments, the optical fiber is not in contact with a wall of the cavity.

In embodiments, the distributed Bragg reflector is a fiber Bragg grating.

In embodiments, the sensor portion of the optical fiber is arranged stress-free in the cavity after fixing the first portion and the second portion of the housing.

In embodiments, the housing comprises a lower part having a cross section of the first and second openings and a cross section of the cavity and a complementary upper part having a cross section of the first and second openings and a cross section of the cavity.

The second aspect of the invention further relates to a sensor array comprising one or more thermal sensors according to the second aspect of the invention.

The second aspect of the invention further relates to a measurement system comprising a sensor array according to the second aspect of the invention and a interrogator system operatively connected to the sensor array.

The second aspect of the invention further relates to a method for manufacturing a sensor array comprising multiple thermal sensors, wherein use is made of a method according to the second aspect of the invention.

The second aspect of the invention further relates to a method manufacturing a measurement system comprising one or more thermal sensors according to the second aspect of the invention and an interrogator system, wherein use is made of a method according to the second aspect of the invention.

The first and second aspects of the invention will now be explained below with reference to the drawing in which:
- Fig. 1 shows a valve monitoring system;
- Fig. 2 shows a valve provided with a valve monitoring system;
- Fig. 3 shows a thermal sensor; and

Figs. 4a - 4c show a housing with connecting means.

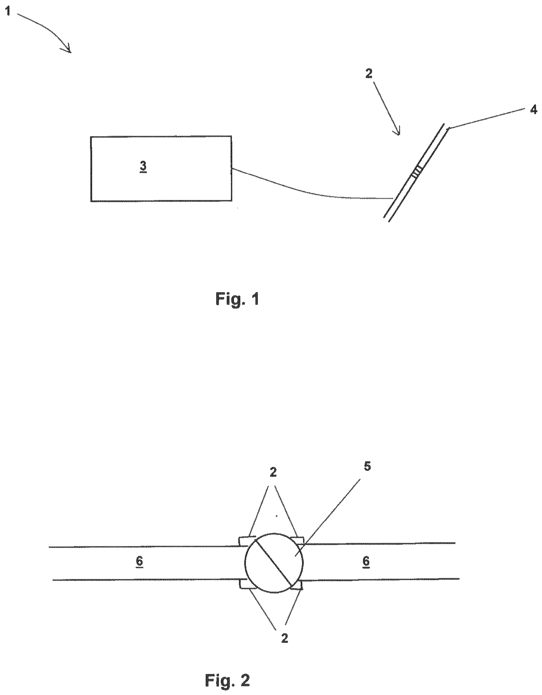

Figure 1 shows a valve monitoring system 1 comprising an external parameter sensor 2, here shown as a section of an optical fiber 4 with a fiber Bragg grating, and a processor 3 that is operatively connected to the external parameter sensor 2.

The external parameter sensor 2 may be a temperature sensor which, in this embodiment, functions via expansion and contraction of the optical fiber 4 due to temperature changes, or a strain sensor which, in this embodiment, functions via expansion and contraction of the optical fiber 4 due to strain applied thereto.

The external parameter sensor 2 is to be mounted on the outside of a valve 5 as shown in figure 2, or pipe 6 of an industrial piping system comprising the valve, e.g. adjacent to the valve. Figure 2 shows multiple external parameter sensors 2 that are mounted on the outside of the valve 5, wherein the valve 5 is shown to be provided on the pipe 6, e.g. to allow or prevent a flow of fluid through the pipe 6 depending on the valve configuration.

The processor 3 is configured to:
- receive one or more external parameters measured, e.g. by discrete or continuously measuring of the outside of the valve of the outside of the pipe, by the one or more external parameter sensors, wherein the one or more external parameters comprise at least one of a temperature of the outside of the valve or pipe and a vibration of an outside of the valve or pipe;
- compare the one or more received external parameters to one or more corresponding expected external parameters associated with the valve;
- determine the condition of the valve based on the comparing of the one or more received external parameters to the one or more corresponding expected external parameters, for example determine the condition of the valve based on a deviation between at least one of the one or more received external parameters and at least one of the corresponding expected external parameters; and

For example, an outside temperature of the valve shown in figure 2 may change depending on the valve configuration. For example, a fluid may flow into pipe 6 from a lefthand side of the figure and, initially, the valve 5 may be in a first configuration preventing flow from the fluid through the valve 5. During normal functioning, a temperature on a lefthand side of the valve 5 may be different than a temperature on the righthand side of the valve 5, e.g. because no fluid flows to the right hand side. However, if the valve is not functioning correctly, the fluid may leak to the righthand side influencing the temperature. Thus, by comparing the measured temperatures, or generally external parameters, to expected external parameters, e.g. depending on the valve configuration, the condition, e.g. working condition, of the valve 5 may be determined and monitored.

The processor 3 may then be configured to output a signal representative of the determined condition. For example, a signal may be provided if it is determined that the valve 5 is leaking. Maintenance may be performed based on this signal.

The expected external parameters may be based on, e.g. determined on, previous measurements of the external parameters of the valve 5. For example, for each given valve configuration an expected external parameter, e.g. an expected external parameter pattern, may be determined based on previous measurements of the external parameters when the valve 5 is in that valve configuration.

The expected external parameters may also be based on, e.g. determined on, measured external parameters of other valves, e.g. adjacent valves, which may be expected to shown similar behaviour. For example, a measured temperature of an outside of a second valve may be used to determine the expected external parameters for the current valve 5. This allows to determine expected external parameters, e.g. expected external parameter patterns, which may take into account conditions such as environmental conditions or conditions depending on the fluid and valve, such as valve material.

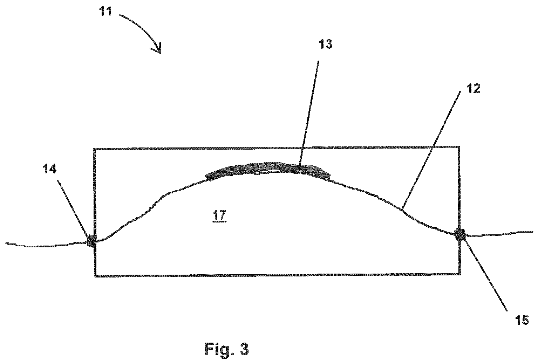

Figure 3 shows a thermal sensor 11 comprising an optical fiber 12 having a sensor portion 13 provided in a housing 17. The optical fiber 12 extends from an outside of the housing 17 to an inside of the housing 17 through the first opening 14 and the second opening 15. The optical fiber 12 is fixed to the first opening 14 and second opening 15.

The optical fiber 15 may have been provided through the first opening 14 and second opening 15 and then fixed thereto before moving the first opening 14 towards the second opening 15 to cause the optical fiber 12 to curve inside the housing 17 causing a curve at the sensor portion 13 as shown in the figure 3.

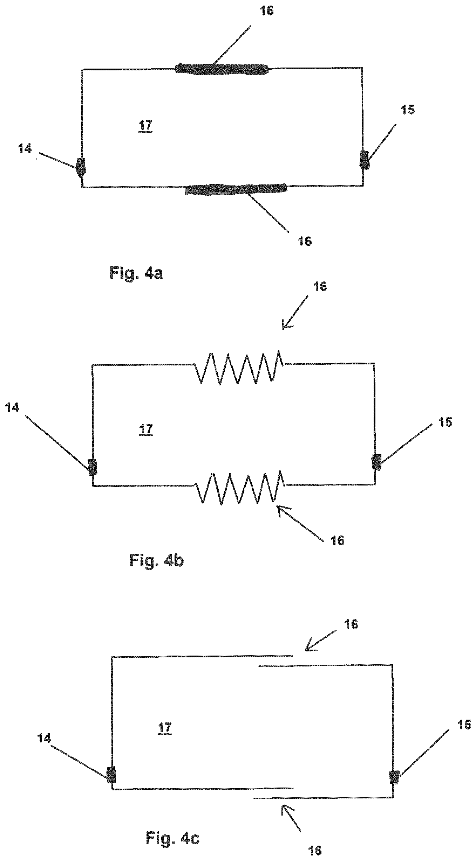

Figures 4a - 4c show different embodiments of connecting means 16 which may allow relative movement of the first portion and second portion, and thus of the first opening 14 relative to the second opening 15.

Figure 4a shows an embodiment of the housing 17 of the sensor 11 where the connecting means are embodied as a compressible material . The housing 17 may be compressed by pushing against the sides thereof compressing the compressible material of the connecting means 17, which causes an optical fiber fixed in the first opening 14 and second opening 15 to become curved.

Figure 4b shows an embodiment of the housing 17 of the sensor 11 where the connecting means 16 are embodied as a foldable structure. The foldable structure 16 may be embodied as an accordion like structure that allows the first portion to move relative to the second portion of the housing 17.

Figure 4c shows an embodiment of the housing 17 of the sensor 11 where the connecting means 16 are embodied as sliding means 16. The first portion may move relative to the second portion by sliding them relative to each other with the sliding means 17.

In all embodiments shown in figures 3, 4a, 4b and 4c, the connecting means 16 allow, before being fixed, movement of the first portion relative to the second portion of the housing 17 such that an optical fiber 12 fixed in the first opening 14 and the second opening 15 may be curved in the housing 17 during a manufacturing process.

### CLAUSES

The second aspect of the invention is illustrated by the following clauses, in which clause:
1. Method for manufacturing a thermal sensor comprising:
   - providing an optical fiber with a sensor portion having a distributed Bragg reflector;
   - fixing the optical fiber in a first opening provided in a first portion of a housing and fixing the optical fiber in a second opening provided in a second portion of the housing such that the sensor portion is between the first opening and the second opening, wherein the first opening and second opening extend from an outside of the housing to an inside of the housing;
   - moving the first portion and the second portion of the housing relative to each other such that a distance between the first opening and the second opening is reduced and such that the sensor portion is provided with a curvature; and
   - fixing the first portion of the housing to the second portion of the housing preventing further relative movement and such that the first portion and the second portion of the housing form a cavity on the inside of the housing containing the curved sensor portion.
2. Method according to clause 1, wherein the method comprises fixing the optical fiber in the first opening and the second opening by sonic welding, e.g. ultrasonic welding, and/or wherein the method comprises fixing the first portion of the housing to the second portion of the housing using sonic welding, e.g. ultrasonic welding.
3. Method according to one or more of the preceding clauses, further comprising providing the optical fiber with a protective layer around the optical fiber on a portion of the optical fiber different from the sensor portion.
4. Method according to one or more of the preceding clauses, wherein the first portion of the housing is connected to the second portion of the housing by connecting means which allow for movement of the first portion relative to the second portion.
5. Method according to clause 4, wherein the connecting means are embodied as a foldable structure, e.g. as a foldable accordion structure.
6. Method according to clause 4, wherein the connecting means are embodied as a compressible material, e.g. which may be fixed by rigidization thereof, e.g. by applying a temperature thereto to make the compressible material rigid.
7. Method according to clause 4, wherein the connecting means are embodied as a sliding mechanism that allows sliding of the first portion relative to the second portion.
8. Method according to one or more of the preceding clauses, wherein the optical fiber is not in contact with a wall of the cavity after fixing the first portion and the second portion of the housing.
9. Method according to one or more of the preceding clauses, wherein the distributed Bragg reflector is a fiber Bragg grating.
10. Method according to one or more of the preceding clauses, wherein the method further comprises fixing the first portion of the housing to the second portion of the housing by applying a fixing means, such as a glue or a mechanical fixing means.
11. Method according to one or more of the preceding clauses, wherein the sensor portion of the optical fiber is arranged stress-free in the cavity after fixing the first portion and the second portion of the housing.
12. Method according to one or more of the preceding clauses, wherein the housing comprises a lower part having a cross section of the first and second openings and a cross section of the cavity and a complementary upper part having a cross section of the first and second openings and a cross section of the cavity, wherein the method comprises:
   - inserting the optical fiber into the lower part of the housing by guiding the optical fiber through the first and second openings such that the sensor part is arranged in between the first and second openings; and
   - fixing the upper part of the housing on the lower part of the housing.
13. Thermal sensor comprising:
   - an optical fiber with a sensor portion having a distributed Bragg reflector; and
   - a housing having a first opening provided in a first portion of a housing and a second opening provided in a second portion of the housing, wherein the optical fiber is fixed in the first opening and the second opening such that the sensor portion is between the first opening and the second opening, wherein the first opening and second opening extend from an outside of the housing to an inside of the housing, and such that the first portion and the second portion of the housing form a cavity on the inside of the housing containing a curved sensor portion.
14. Thermal sensor according to clause 13, further comprising a protective layer around the optical fiber on a portion of the optical fiber different from the sensor portion.
15. Thermal sensor according to one or more of the clauses 13 - 14, further comprising connecting means that connect the first portion of the housing to the second portion of the housing by connecting means.
16. Thermal sensor according to clause 15, wherein the connecting means are embodied as a foldable structure, e.g. as a foldable accordion structure.
17. Thermal sensor according to clause 15, wherein the connecting means are embodied as a compressible material, e.g. which may be fixed by rigidization thereof, e.g. by applying a temperature thereto to make the compressible material rigid.
18. Thermal sensor according to clause 15, wherein the connecting means are embodied as a sliding mechanism that allows sliding of the first portion relative to the second portion.
19. Thermal sensor according to one or more of the clauses 13 - 18, wherein the optical fiber is not in contact with a wall of the cavity.
20. Thermal sensor according to one or more of the clauses 13 - 19, wherein the distributed Bragg reflector is a fiber Bragg grating.
21. Thermal sensor according to one or more of the clauses 13 - 20, wherein the sensor portion of the optical fiber is arranged stress-free in the cavity after fixing the first portion and the second portion of the housing.
22. Thermal sensor according to one or more of the clauses 13 - 21, wherein the housing comprises a lower part having a cross section of the first and second openings and a cross section of the cavity and a complementary upper part having a cross section of the first and second openings and a cross section of the cavity.
23. Sensor array comprising one or more thermal sensors according to one or more of the clauses 13 - 22.
24. Measurement system comprising a sensor array according to clause 23 and a interrogator system operatively connected to the sensor array.
25. Method for manufacturing a sensor array comprising multiple thermal sensors, wherein use is made of a method according to one or more of the clauses 1 - 12.
26. Method for manufacturing a measurement system comprising one or more thermal sensors according to one or more of the clauses 24 - 22 and an interrogator system, wherein use is made of a method according to one or more of the clauses 1 - 12.

## Claims

1. Valve monitoring system for determining a condition of a valve of an industrial piping system comprising the valve and one or more pipes connected to the valve for allowing a fluid to flow therethrough, wherein the valve is configured for switching between a first valve configuration and a second valve configuration, comprising:
- one or more external parameter sensors that are provided on an outside of the valve or on an outside of a pipe of the industrial piping system for measuring one or more external parameters of an outside of the valve or an outside of the pipe, wherein the one or more external parameter sensors comprise at least one of a temperature sensor and a vibration sensor, wherein the one or more external parameters are associated with the valve; and
- a processor operatively connected to the one or more external parameter sensors,
wherein the processor is configured to:
- receive one or more external parameters measured, e.g. by discrete or continuously measuring of the outside of the valve of the outside of the pipe, by the one or more external parameter sensors, wherein the one or more external parameters comprise at least one of a temperature of the outside of the valve or pipe and a vibration of an outside of the valve or pipe;
- compare the one or more received external parameters to one or more corresponding expected external parameters associated with the valve;
- determine the condition of the valve based on the comparing of the one or more received external parameters to the one or more corresponding expected external parameters, for example determine the condition of the valve based on a deviation between at least one of the one or more received external parameters and at least one of the corresponding expected external parameters; and
- output a signal representative of the determined condition of the valve.

2. Valve monitoring system according to claim 1, wherein the valve monitoring system comprises an optical fiber having one or more fiber Bragg gratings with grating structures that comprise regions of alternating refractive index for measuring a temperature, a light source for emitting light through the optical fiber and an optical sensor for measuring light propagated by the light source through the optical fiber, wherein corresponding fiber Bragg gratings form part of the at least one temperature sensor and/or the at least one vibration sensor.

3. Valve monitoring system according to claim 2, wherein the optical fiber is attached to the outside of the valve at the one or more fiber Bragg gratings.

4. Valve monitoring system according to one or more of the preceding claims, wherein the one or more expected external parameters, e.g. an expected temperature or an expected vibration, associated with the valve are related to corresponding measured external parameters associated with a second valve, e.g. wherein the second valve is a valve adjacent to the valve in the industrial piping structure.

5. Valve monitoring system according to claim 4, wherein the processor is configured to determine the one or more expected external parameters associated with the valve based on the corresponding measured external parameters of the second valve.

6. Valve monitoring system according to one or more of the preceding claims, wherein the processor is further configured to:
- perform multiple measurements with the one or more external parameter sensors at different points in time, e.g. at regular intervals, to obtain external parameter data of each external parameter sensor at the different points in time; and
- store the external parameter data of each of the external parameter sensors.

7. Valve monitoring system according to one or more of the preceding claims, wherein the one or more expected external parameters are related to measured external parameters of the valve or the pipe in a past time period, e.g. the external parameter data of the external parameter sensors, e.g. wherein the one or more expected external parameters are an average of the external parameter data of corresponding external parameter sensors.

8. Valve monitoring system according to one or more of the preceding claims, wherein the processor is configured to select the expected external parameters from the group comprising external parameters associated with the first valve configuration, external parameters associated with the second valve configuration, and external parameters associated with the valve switching between the first valve configuration and the second valve configuration.

9. Valve monitoring system according to claim 8, wherein the processor is configured to select the expected external parameters based on if the valve is in the first valve configuration, the second valve configuration, or between the first valve configuration and the second valve configuration.

10. Valve monitoring system according to one or more of the preceding claims, wherein the processor is configured to receive an input representing if the valve is in the first valve configuration, the second valve configuration, or between the first valve configuration and the second valve configuration.

11. Valve or pipe of an industrial piping system comprising a valve monitoring system according to one or more of the preceding claims.

12. Method for determining a condition of a valve of an industrial piping system comprising the valve and one or more pipes connected to the valve for allowing a fluid to flow therethrough, wherein use is made of a valve monitoring system according to one or more of the claims 1 - 10.

13. Method for determining the condition of a valve according to claim 12, wherein the valve is configured for switching between a first valve configuration and a second valve configuration, comprising:
- providing one or more external parameter sensors on an outside of the valve or an outside of the pipe, wherein the one or more external parameter sensors are for measuring one or more external parameter of the outside of the valve or an outside of the pipe, wherein the one or more external parameter sensors comprise at least one of a temperature sensor and a vibration sensor;
- discretely or continuously measuring one or more external parameters of the outside of the valve or of the outside of the pipe by the one or more external parameter sensors, wherein the one or more external parameters comprise at least one of a temperature of the outside of the valve and a vibration of an outside of the valve and wherein the one or more external parameters are associated with the valve;
- comparing the one or more measured external parameters to one or more corresponding expected external parameters associated with the valve; and
- determining the condition of the valve based on the comparing of the one or more received external parameters to the one or more corresponding expected external parameters, for example determine the condition of the valve based on a deviation between at least one of the one or more received external parameters and at least one of the corresponding expected external parameters.

14. Method according to claim 13, wherein the method further comprises:
- performing multiple measurements with the one or more external parameter sensors at different points in time, e.g. at regular intervals, to obtain external parameter data of each external parameter sensor at the different points in time; and
- storing the external parameter data of each of the external parameter sensors.

15. Method according to one or more of the claims 13 - 14, further comprising:
- selecting the expected external parameters from the group comprising external parameters associated with the first valve configuration, external parameters associated with the second valve configuration, and external parameters associated with the valve switching between the first valve configuration and the second valve configuration.

16. Method according to claim 15, further comprising:
- selecting the expected external parameters based on if the valve is in the first valve configuration, the second valve configuration, or between the first valve configuration and the second valve configuration.
